# EUROPEAN PATENT SPECIFICATION

(11) **EP 1 843 421 B1**
(45) Date of publication and mention of the grant of the patent: **29.06.2011**
(21) Application number: 06112289.1
(22) Date of filing: 06.04.2006
(51) Int. Cl.: H01M 8/04

(54) **Fuel cell system**
Brennstoffzellensystem
Système de pile à combustible

(43) Date of publication of application: 10.10.2007
(73) Proprietor: Samsung SDI Germany GmbH, 12459 Berlin (DE); Samsung SDI Co., Ltd., Suwon-si Gyeonggi-do (KR)
(72) Inventor: Larrain, Diego, 10999 Berlin (DE); Bronold, Matthias, 12209 Berlin (DE)
(74) Representative: Hengelhaupt, Jürgen

(56) References cited:
- DE-A1-102004 049 623
- US-A- 3 775 186
- US-A1- 2003 189 416
- US-A1- 2004 229 087
- US-A1- 2005 238 932

## Description

The invention relates to a fuel cell system comprising at least one stack and at least two fluid conduits.

In a conventional fuel cell system, concentrated fuel and pure water have to be mixed to a fuel mixture. For this purpose water and fuel flow through an inlet of a mixer into the mixer. In the mixer fuel and water are mixed and stored. The mix of fuel and water flows through an outlet of the mixer to the stack.

The principle idea of the fuel cell systems disclosed by the documents US20040166389 and US20040062964 is shown in figure 1. A DMFC fuel cell stack (10) has a cathode air inlet (11) and a cathode air outlet (13). An air pump (12) supplies reaction air to the stack cathode through the cathode air inlet (11). The DMFC fuel cell stack (10) works with a so-called fuel stream composed of water and methanol on the anode side and with a so-called oxidant stream (air or oxygen) on the cathode side. The DMFC stack directly produces electricity by an electrochemical reaction. A membrane (14) of the stack is permeable to water and thus the operation of the stack generates a transfer of water from the anode side to the cathode side by electro-osmotic drag. In the heat-exchanger (50) a condensation of the water from the cathode air outlet (13) occurs. The water is separated in a water separator (60) and is re-inserted in the so-called anode circuit (18). The air exits the separator through the venting openings (61). The liquid outlet (62) of the water-separator (60) is connected with the main anode circuit (18). The anode fuel circuit is composed of a circulation pump (23) feeding the fuel mixture to the stack anode inlet (15), of a carbon dioxide separator device (20) and of a mixer (22) where the concentrated fuel and the water recovered from the heat exchanger are fed to the circuit through their respective water connection (64) and fuel connection (32). A driving force is necessary to feed the water recovered, therefore the figure shows a pump for the water recovery (63).

A device combining the function of a carbon dioxide separator, a water-separator, a mixer and a tank is described in the documents EP 1 383 190 and EP 1 383 191 A1. The principle of this device is shown in figure 2. An inlet for a stream of water/air (101) is located on the top part of the device. Liquid water is separated by gravity (106) and falls to the bottom of the device. The inlet stream of fuel is located at the bottom of the device (102) which works as a liquid hold-up tank. In this tank fuel and water are mixed. The gases from the incoming stream exit the device through an outlet vent (104) which is composed of a liquid-tight gas permeable membrane. The liquid mixture exits the device through the outlet (103) and flows to the stack. Regarding the combination of the functions of mixer and tank the problem arises that operation of the device is dependent on the orientation. That is, the devices disclosed in the documents EP 1 383 190 and EP 1 383 191 A1 work only in the up-right position which makes a use in a tilted or in an over-head position either impossible or requires additional safety installations protecting the device against dysfunction.
The fact that the device combines a carbon dioxide separator, a water-separator, a mixer and a tank leads to a significant volume and to a large height which makes it difficult to integrate the DMFC system in a laptop docking station or in a battery-like system.
Additionally, a pump feeding a fluid into a main circuit is necessary but is not suitable because the use of a pump increases the system complexity, volume and weight while affecting the system efficiency due to the requirement of additional energy for the operation of the pump.

US20040229087 and US3775186 both disclose fuel cell systems with a Venturi pump.

### Object of the invention

Therefore, the object of the invention is to create an orientation independent fuel cell system in which fluids are mixed, wherein the fuel cell system has a small volume and a low weight.

### Summary of the invention

According to the invention a fuel cell system as given in claim 1.

In a Venturi a circulating main stream is locally accelerated in a constriction due to Bernoulli's principle. The acceleration of fluid in the tube constriction causes the static pressure of the main stream to decrease. Thus, the static pressure in a secondary inlet connected with one end to the constriction part of the Venturi pump and with the other end to the ambience is higher than the static pressure in the constriction part of the Venturi pump, especially when the Venturi pump is placed at a low static pressure point in the anode circuit of the fuel cell system (i.e. before the liquid pump). The higher static pressure in the secondary inlet causes the secondary fluid in the secondary inlet to be dragged into the constriction of the Venturi pump where this fluid is mixed with the fluid of the main stream. Main stream and secondary stream are combined and exit the Venturi pump through a pump outlet.
Except of the end connected to the Venturi pump the tube of the secondary inlet has preferably a large diameter as to minimize the pressure drop and to feed a large volume of secondary fluid per time unit into the main stream. The end of the tube of the secondary inlet at the connection to the restriction part of the Venturi pump has preferably the same diameter as the restriction part.
Due to the use of a Venturi pump the system is orientation independent because the effect of gravity does not contribute to the mixing. Additionally, no extra pumps feeding a secondary stream into a main stream are needed. A further advantage is that main stream and secondary stream are combined within the pump, i.e., additional mixers are not required or a mixer integrated in the system may have a smaller volume and capacity.

In addition to the Venturi pump, the fuel cell system further comprises a carbon dioxide separator and may comprise a mixer and / or a water separator and / or a fuel tank.

Thereby the carbon dioxide separator and / or the mixer and / or the water separator and / or the fuel tank may be combined in one device or may be single devices.

The Venturi pump is placed downstream of a carbon dioxide separator and injects water into the main stream flowing through the Venturi pump. Alternatively, the Venturi pump injects concentrated fuel from a tank into the main stream flowing through the Venturi pump, i.e., the Venturi pump is placed between the liquid outlet of the carbon dioxide separator and the stack or between the liquid outlet of the carbon dioxide separator and a mixer. In case of injection of water, the cross section of the tube constriction of the Venturi pump may be as small as 2*10⁻⁷m² to ensure a sufficient acceleration of the fluid and a sufficient static pressure difference between the main and the secondary fluid.
Additionally, a no-return valve may be placed into the system, wherein the no-return valve ensures that the fluid streams towards the Venturi pump.

In case of fuel injection into the main stream by a Venturi pump a regulation valve may be placed between the tank and the Venturi pump, wherein the regulation valve allows the removal of electrically driven fuel pumps.

In an alternative embodiment the Venturi pump is located between a mixer and an inlet of the stack. In this case fuel from a tank may be injected or water from a water separator may be injected into the main stream of the Venturi pump.
However, various positions of the Venturi pump within the main circuit are feasible.. As a matter of course, this applies also to a plurality of Venturi pumps, whose positions may be chosen freely.

In another preferred embodiment the Venturi pump is integrated into a carrier device. The carbon dioxide separator, the water separator or the mixer or a device combining the functions of any of those may serve as such a carrier device. Preferably, the Venturi pump is located in a wall of the carrier device. In that case, the cross section of the constriction part of the Venturi pump is not restricted to a round form.

If the carrier device is a mixer the main inlet or the main outlet of the Venturi pump may be connected to the internal space of the mixer.

Also, two secondary inlets at two junctions may be placed on the tube constriction of the Venturi pump, respectively. For instance, through the first secondary inlet fuel is injected into the main stream and through the second secondary inlet water is injected into the main stream. However, it is also possible that both the secondary inlets are passed through by water or by fuel. The tube constriction may comprise two secondary inlets, wherein each of them may inject either water or fuel into the Venturi pump.

### Brief description of the drawings

The present invention will now be described by way of example with reference to the accompanying drawings, in which:
Fig.1 shows a principle of a Direct Methanol Fuel Cell System according to the prior art;
Fig.2 shows a device combining the function of a carbon dioxide separator, a water separator, a mixer and a tank according to the prior art;
Fig.3 shows a Venturi pump;
Fig.4 shows a Direct Methanol Fuel Cell System with a Venturi pump integrated into the system;
Fig.5 shows a Direct Methanol Fuel Cell System with two Venturi pumps integrated into the system;
Fig.6 shows a Venturi pump integrated into a wall of a carrier device;
Fig.7 shows a sectional view of cut A shown in fig. 6;
Fig.8 shows a sectional view of cut B shown in fig. 6;
Fig.9 shows a Venturi pump with two secondary inlets.

### Detailed description of the embodiments

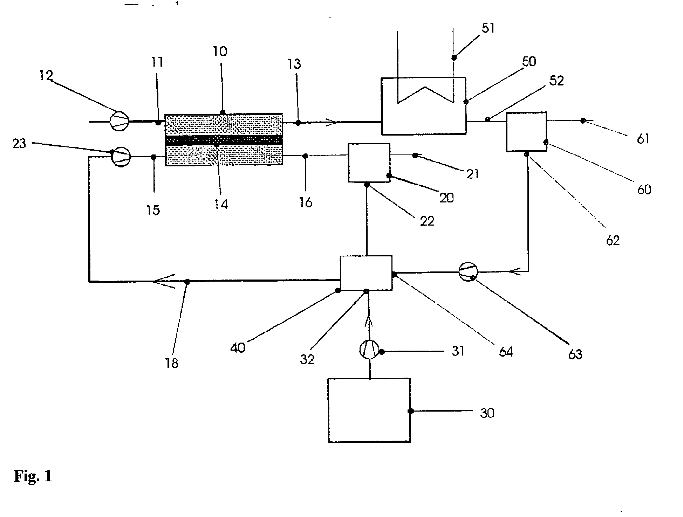

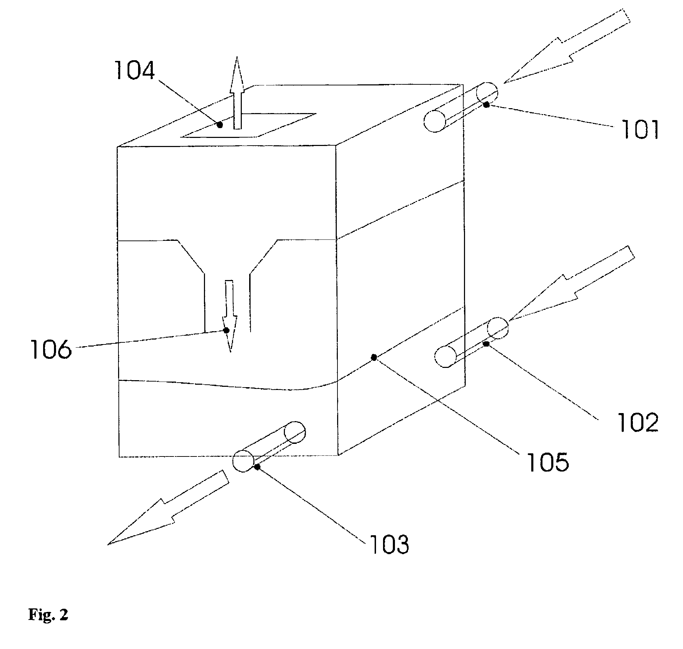

In Figures 1 and 2 the prior art is shown (see above).

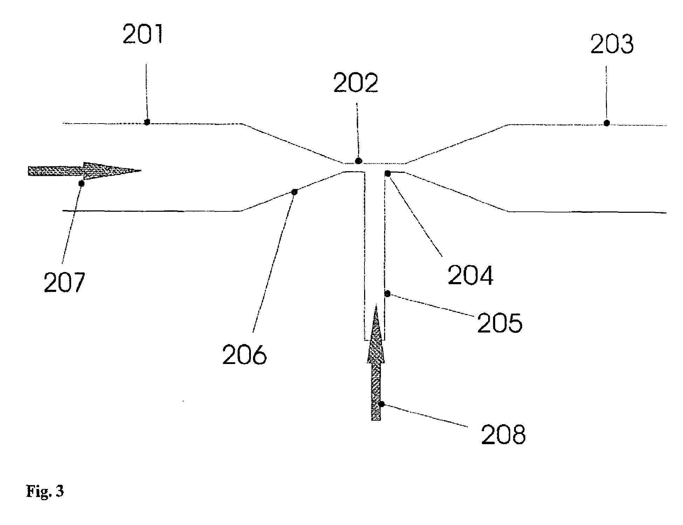

Figure 3 shows a Venturi pump comprising a main conduit inlet (201), a main conduit outlet (203), a secondary fluid inlet (205), a section contraction (206), a tube constriction (202) and a connection of the main conduit and the secondary conduit (204).
The main stream (207) enters the Venturi pump through the main inlet.
The secondary stream (208) is injected through the secondary inlet (205) into the Venturi pump and is mixed there with the fluid of the main stream. The mix of main fluid and secondary fluid exits the Venturi pump through the main outlet (203).

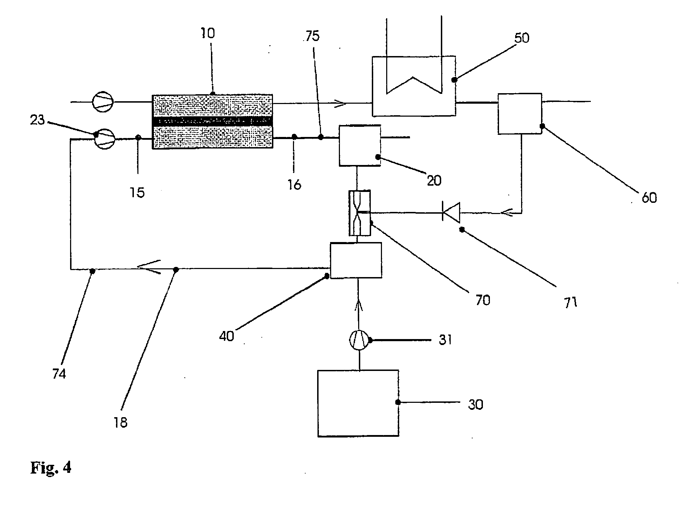

The main idea of the invention is shown in fig. 4, wherein a Venturi-pump (70) is integrated in the fuel cell system and injects water into the main anode circuit. The Venturi pump (70) is placed between the liquid outlet of the carbon dioxide separator (20) and the mixer (40). A no-return device (71) ensures that the fluid streams from the water separator (60) to the Venturi pump (70) and not into the opposite direction.
In alternative embodiments the Venturi pump (70) may be located between the mixer (40) and the stack anode inlet (15) or at any other position within the main anode circuit (18), e.g at positions (74) and/ or (75).

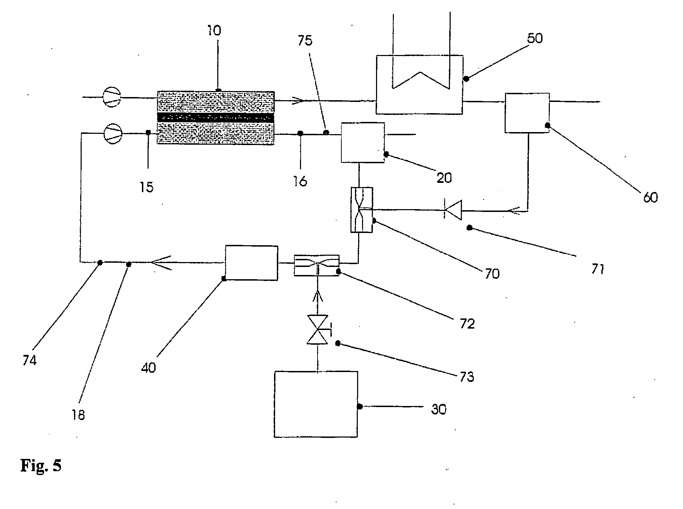

Figure 5 shows the fuel cell system with a first (70) and a second Venturi pump (72), wherein the second Venturi pump (72) is placed between the liquid outlet of the carbon dioxide separator (20) and the mixer (40) and inserts concentrated fuel into the main anode circuit (74). A regulation valve (73) is placed between the tank (30) and the Venturi pump (72). This allows the removal of a (electrically driven) fuel pump and thus simplifies the system.

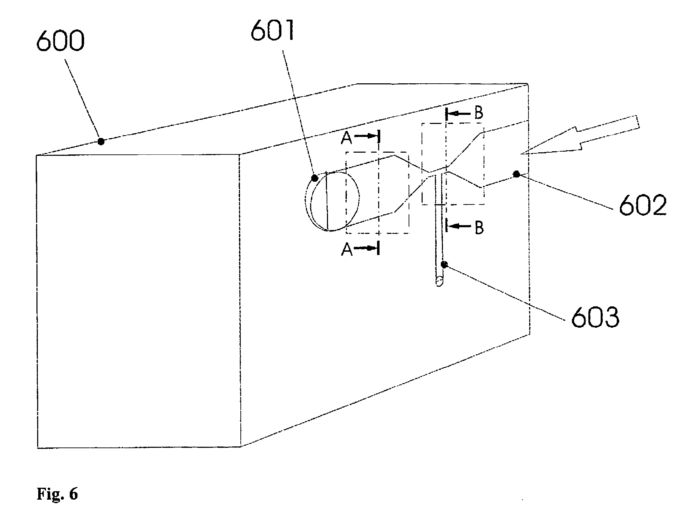

As shown in figure 6 the Venturi pump is integrated into a wall of a carrier device. The carrier device may be the carbon dioxide separator (20) or the water separator (60) or the mixer (40) or any other device integrated in the fuel cell system.

The main Venturi fluid inlet (602) and outlet (601) as well as the secondary inlet are formed in the wall of the carrier device (600).

The main inlet (602) or the main outlet (601) of the Venturi pump may be connected with the internal space of the carrier device (600), particularly if the carrier device (600) is the mixer (40).

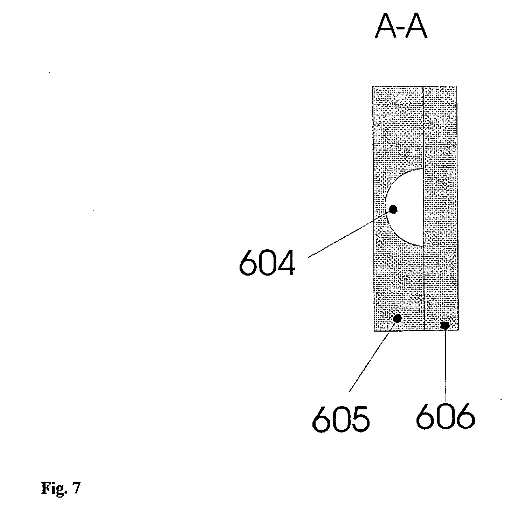

In Fig.7 a sectional view of cut A in fig. 6 is shown, wherein a fluid section (604) is formed ir a wall (605) of a carrier device and is closed by a cover (606).

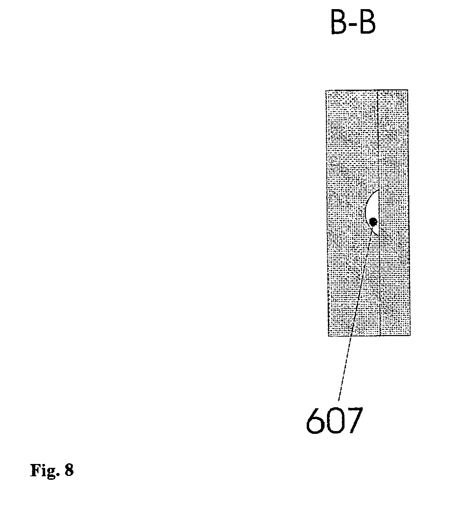

In similar manner, a tube constriction may be formed, which is shown in figure 8 and corresponds to a sectional view of cut B in fig. 6 which is a cut of the channel constriction section (607).

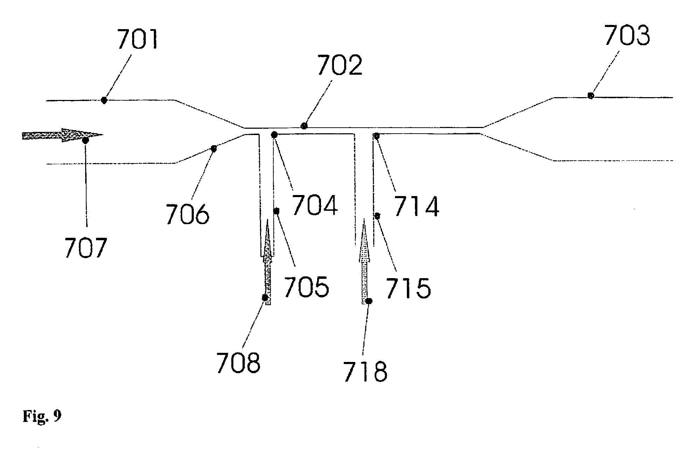

In figure 9 two secondary fluid inlets (705, 715) (e.g. one for the water and one for the concentrated fuel) are arranged on the same tube constriction (702), i.e. one tube constriction (702) has two secondary fluid junctions (704, 714) for a first fluid (704) and a second fluid (705).
The first secondary stream (708) and the second secondary stream (718) are injected into the main stream (707) of the Venturi pump, wherein both the first secondary stream (708) and the second secondary stream (718) have their own fluid inlets (705, 715).

**List of Reference Signs**

| | |
|---|---|
| 10 | DMFC fuel cell stack |
| 11 | stack cathode air inlet |
| 12 | air pump |
| 13 | stack cathode air outlet |
| 14 | membrane |
| 15 | stack anode inlet |
| 16 | stack anode outlet |
| 18 | main anode circuit |
| 20 | carbon dioxide separator |
| 21 | carbon dioxide separator gas outlet |
| 22 | carbon dioxide separator liquid outlet |
| 23 | circulation pump |
| 30 | fuel tank |
| 31 | fuel pump |
| 32 | fuel connection to the mixer |
| 40 | mixer |
| 50 | heat exchanger |
| 51 | cooling air |
| 52 | heat exchanger outlet |
| 60 | water separator |
| 61 | water separator air outlet |
| 62 | water separator liquid outlet |
| 63 | pump for the water recovery |
| 64 | water connection to the mixer |
| 70 | water Venturi pump |
| 71 | no-return device |
| 72 | fuel Venturi pump |
| 73 | regulation valve |
| 74 | alternative location for the Venturi pump |
| 75 | alternative location for the Venturi pump |
| 101 | inlet stream of water/air |
| 102 | inlet stream of fuel |
| 103 | outlet stream of fuel |
| 104 | outlet vent for gases |
| 105 | fuel mixture level |
| 106 | falling water |
| 201 | main inlet |
| 202 | tube constriction |
| 203 | main outlet |
| 204 | junction of main circuit and secondary fluid |
| 205 | secondary fluid inlet |
| 206 | section contraction |
| 207 | main stream |
| 208 | secondary stream |
| 600 | carrier device |
| 601 | outlet channel section |
| 602 | inlet channel section |
| 603 | secondary stream inlet |
| 604 | cut of a fluid section |
| 605 | wall of the carrier device |
| 606 | cover |
| 607 | cut of the channel constriction section |
| 701 | main circuit inlet |
| 702 | tube constriction |
| 703 | main circuit outlet |
| 704 | junction of main circuit and first secondary fluid |
| 705 | first secondary fluid inlet |
| 706 | section contraction |
| 707 | main stream |
| 708 | first secondary stream |
| 714 | junction of main circuit and second secondary fluid |
| 715 | second secondary fluid inlet |
| 718 | second secondary stream |

## Claims

1. Fuel cell system, comprising at least one stack (10) and at least one main fluid conduit directly or indirectly connected to the stack, and at least a secondary fluid conduit,
**characterized in that**
the fuel cell system further comprises a Venturi pump (70, 72) placed downstream of a carbon dioxide separator (20) integrated into the fuel cell system, wherein
at least one of the main fluid conduits and one of the secondary fluid conduits are connected to each other by the Venturi pump in such a manner that due to the Venturi effect of the Venturi pump (70, 72) a medium carried in the secondary fluid conduit is dragged into the main stream of the Venturi pump arranged in the main fluid conduit and the media of the fluid conduits connected by the Venturi pump (70, 72) are mixed, and wherein the Venturi pump (70, 72) is arranged to inject water or fuel into the main stream flowing through the Venturi pump (70, 72).

2. Fuel cell system of claim 1, wherein the Venturi pump (70, 72) is placed between a mixer (40) integrated into the fuel cell system and the stack (10).

3. Fuel cell system of of claim 1 , wherein the Venturi pump (70, 72) is placed between the carbon dioxide separator (20) and the stack (10).

4. Fuel cell system as claimed in one of the preceding claims, wherein the Venturi pump (70, 72) is integrated into a carrier device which is the carbon dioxide separator (20) or a water separator (60) or the mixer (40) or a device combining the functions of carbon dioxide separator (20) and / or water separator (60) and / or mixer (40).

5. Fuel cell system as claimed in claim 4, wherein the Venturi pump (70, 72) is integrated into the wall (605) of the carrier device.

6. Fuel cell system as claimed in one of the claims 4-5, wherein a main inlet (201) or a main outlet (203) of the Venturi pump (70, 72) is connected to the internal space of the carrier device.

7. Fuel cell system as claimed in one of the preceding claims, wherein the cross section of the tube constriction (202) of the Venturi pump (70, 72) has at least an area of 2*10⁻⁷m².

8. Fuel cell system as claimed in one of the preceding claims, wherein the system comprises a no-return device (71).

## Patentansprüche

1. Brennstoffzellensystem, das mindestens einen Stapel (10), mindestens eine direkt oder indirekt mit dem Stapel verbundene Hauptfluidleitung und mindestens eine sekundäre Fluidleitung umfasst,
**dadurch gekennzeichnet, dass**
das Brennstoffzellensystem ferner eine Venturipumpe (70, 72) umfasst, die hinter einem in das Brennstoffzellensystem integrierten Kohlendioxidabscheider (20) angeordnet ist, wobei
mindestens eine der Hauptfluidleitungen und eine der sekundären Fluidleitungen über die Venturipumpe in solcher Weise miteinander verbunden sind, dass ein in der zweiten Fluidleitung befördertes Medium aufgrund des Venturi-Effekts der Venturipumpe (70, 72) in den Hauptstrom der in der Hauptfluidleitung angeordneten Venturipumpe gezogen wird und sich die Medien der über die Venturipumpe (70, 72) verbundenen Fluidleitungen vermischen, und wobei die Venturipumpe (70, 72) dazu vorgesehen ist, Wasser oder Brennstoff in den durch die Venturipumpe (70, 72) strömenden Hauptstrom einzuspritzen.

2. Brennstoffzellensystem nach Anspruch 1, wobei die Venturipumpe (70, 72) zwischen einem in das Brennstoffzellensystem integrierten Mischer (40) und dem Stapel (10) angeordnet ist.

3. Brennstoffzellensystem nach Anspruch 1, wobei die Venturipumpe (70, 72) zwischen dem Kohlendioxidabscheider (20) und dem Stapel (10) angeordnet ist.

4. Brennstoffzellensystem nach einem der vorhergehenden Ansprüche, wobei die Venturipumpe (70, 72) in eine Trägervorrichtung integriert ist, bei der es sich um den Kohlendioxidabscheider (20) oder einen Wasserabscheider (60) oder den Mischer (40) handelt oder um eine Vorrichtung, die die Funktionen von Kohlendioxidabscheider (20) und/oder Wasserabscheider (60) und/oder Mischer (40) kombiniert.

5. Brennstoffzellensystem nach Anspruch 4, wobei die Venturipumpe (70, 72) in die Wand (605) der Trägervorrichtung integriert ist.

6. Brennstoffzellensystem nach einem der Ansprüche 4 bis 5, wobei ein Haupteinlass (201) oder ein Hauptauslass (203) der Venturipumpe (70, 72) mit dem Innenraum der Trägervorrichtung verbunden ist.

7. Brennstoffzellensystem nach einem der vorhergehenden Ansprüche, wobei der Querschnitt der Rohrverengung (202) der Venturipumpe (70, 72) eine Fläche von mindestens 2*10⁻⁷ m² aufweist.

8. Brennstoffzellensystem nach einem der vorhergehenden Ansprüche, wobei das System eine Sperrvorrichtung (71) aufweist.

## Revendications

1. Système de pile à combustible, comprenant au moins un empilement (10) et au moins un conduit principal de fluide relié directement ou indirectement à l'empilement, et au moins un conduit secondaire de fluide, **caractérisé en ce que**
le système de pile à combustible comprend en outre une pompe Venturi (70, 72) placée en aval d'un séparateur de dioxyde de carbone (20) intégré dans le système de pile à combustible, où au moins l'un des conduits principaux de fluide et l'un des conduits secondaires de fluide sont reliés l'un à l'autre par la pompe Venturi de sorte que par l'effet Venturi de la pompe Venturi (70, 72) un milieu transporté dans le conduit secondaire de fluide est entraîné dans le courant principal de la pompe Venturi agencé dans le conduit principal de fluide et les milieux des conduits de fluide reliés par la pompe Venturi (70, 72) sont mélangés, et où la pompe Venturi (70, 72) est agencée pour injecter de l'eau ou du combustible dans le courant principal qui traverse la pompe Venturi (70, 72).

2. Système de pile à combustible de la revendication 1, dans lequel la pompe Venturi (70, 72) est placée entre un mélangeur (40) intégré dans le système de pile à combustible et l'empilement (10).

3. Système de pile à combustible de la revendication 1, dans lequel la pompe Venturi (70, 72) est placée entre le séparateur de dioxyde de carbone (20) et l'empilement (10).

4. Système de pile à combustible tel que revendiqué dans l'une des revendications précédentes, dans lequel la pompe Venturi (70, 72) est intégrée dans un dispositif porteur qui est le séparateur de dioxyde de carbone (20), un séparateur d'eau (60), le mélangeur (40) ou un dispositif combinant les fonctions du séparateur de dioxyde de carbone (20) et/ou du séparateur d'eau (60) et/ou du mélangeur (40).

5. Système de pile à combustible tel que revendiqué dans la revendication 4, dans lequel la pompe Venturi (70, 72) est intégrée dans la paroi (605) du dispositif porteur.

6. Système de pile à combustible tel que revendiqué dans l'une des revendications 4 et 5, dans lequel une admission principale (201) ou une sortie principale (203) de la pompe Venturi (70, 72) est reliée à l'espace interne du dispositif porteur.

7. Système de pile à combustible tel que revendiqué dans l'une des revendications précédentes, dans lequel la section transversale de la constriction de tube (202) de la pompe Venturi (70, 72) a au moins une superficie de 2*10⁻⁷m².

8. Système de pile à combustible tel que revendiqué dans l'une des revendications précédentes, dans lequel le système comprend un dispositif anti-retour (71).
